# EUROPÄISCHE PATENTANMELDUNG

(11) **EP 3 940 904 A1**
(43) Veröffentlichungstag der Anmeldung: **19.01.2022**
(21) Anmeldenummer: 21191260.5
(22) Anmeldetag: 20.12.2018
(51) Int. Cl.: H02G 3/08, H02G 3/22, H02G 15/013

(54) **DICHTVORRICHTUNG**

(30) Priorität: 04.06.2018 DE 102018113247
(62) Teilanmeldung aus: 18826355.2
(71) Anmelder: Reichle & De-Massari AG, 8620 Wetzikon (CH)
(72) Erfinder: DI DOMENICO, Maurizio, Brüttisellen (CH)
(74) Vertreter: Daub, Thomas

(57) **Zusammenfassung**

Die Erfindung geht aus von einer Dichtvorrichtung (10a, 10b, 10c, 10d, 10e) zur Durchführung und Abdichtung eines länglichen Objekts (12a, 12b, 12c, 12d, 12e), mit zumindest einer Dichteinheit (14a, 14b, 14c, 14d, 14e), welche dazu vorgesehen ist, das Objekt (12a, 12b, 12c, 12d, 12e) in einem montierten Zustand zumindest abschnittsweise vollständig in Umfangsrichtung zu umschließen, und welche zumindest einen Dichtabschnitt (16a, 16b, 16c, 16d, 16e) aufweist, welcher dazu vorgesehen ist, in dem montierten Zustand das Objekt (12a, 12b, 12c, 12d, 12e) zu kontaktieren und mittels einer intrinsischen Vorspannung abzudichten.

Es wird vorgeschlagen, dass der Dichtabschnitt (16a, 16b, 16c, 16d, 16e) in zumindest einem demontierten Zustand über zumindest einen Großteil seiner Länge einen wenigstens im Wesentlichen konstanten Innendurchmesser (18a, 18b, 18c, 18d, 18e) aufweist.

## Beschreibung

### Stand der Technik

Die Erfindung betrifft eine Dichtvorrichtung nach dem Oberbegriff des Anspruchs 1 und ein Verfahren zur Abdichtung zumindest eines länglichen Objekts gegenüber einem Dichtpanel nach dem Oberbegriff des Anspruchs 15.

Aus der europäischen Patentschrift EP 2 764 591 B1 ist bereits eine Dichtvorrichtung mit einer Dichteinheit bekannt, welche ein Dichtelement mit stufenförmig abgesetzten Bereichen mit unterschiedlichen Durchmessern und eine Durchgangsöffnung zur Durchführung eines Kabels aufweist. Um eine Dichtwirkung bei einer Durchführung des Kabels zu erzielen, werden Bereiche mit einem kleineren Durchmesser als der Durchmesser des Kabels abgetrennt. Die Dichteinheit ist aus einem thermoplastischen Kunststoff, wie Styrol-Ethylen-Butylen-Styrol (SEBS), oder einem Elastomer, wie beispielsweise Nitril-Butadien-Kautschuk, ausgebildet. Die Dichteinheit ist mit ihrem Grundkörper an einem aus zwei Rahmenteilen bestehenden Rahmenelement durch eine Presspassung befestigt.

Ferner ist aus der Patentschrift US 5,442,140 ebenfalls eine Dichteinheit mit stufenförmig abgesetzten Bereichen und einer Durchgangsöffnung zur Durchführung eines länglichen Objekts bekannt, welche beliebig, und zwar je nach Durchmesser des länglichen Objekts abtrennbar sind.

Des Weiteren offenbart die Druckschrift EP 1 643 604 A1 einen Gelkörper mit einer Gelmasse und einer jeweils an einer Ober- und Unterseite der Gelmasse angeordneten Haut, wobei die Haut mit der Gelmasse fest verbunden ist. Die Haut ist dazu vorgesehen, ein Heraustreten und/oder Mitschleppen der Gelmasse bei einem Hindurchstoßen eines länglichen Objekts durch die Haut und die Gelmasse über die Ober- und Unterseite der Gelmasse zu verhindern.

Zudem ist aus dem Gebrauchsmuster DE 20 2016 104 057 U1 eine als Dichteinheit fungierende Tülle zur Durchführung eines länglichen Objekts bekannt, deren Enden bezüglich einer Haupterstreckungsrichtung der Dichteinheit in Form eines Kegelstumpfmantels ausgebildet sind.

Die Aufgabe der Erfindung besteht insbesondere darin, eine gattungsgemäße Dichtvorrichtung mit verbesserten Eigenschaften hinsichtlich einer Montage bereitzustellen. Die Aufgabe wird erfindungsgemäß durch die Merkmale der Ansprüche 1 und 15 gelöst, während vorteilhafte Ausgestaltungen und Weiterbildungen der Erfindung den Unteransprüchen entnommen werden können.

### Vorteile der Erfindung

Die Erfindung geht aus von einer Dichtvorrichtung zur Durchführung und Abdichtung eines länglichen Objekts, mit zumindest einer Dichteinheit, welche dazu vorgesehen ist, das Objekt in einem montierten Zustand zumindest abschnittsweise vollständig in Umfangsrichtung zu umschließen, und welche zumindest einen Dichtabschnitt aufweist, welcher dazu vorgesehen ist, in dem montierten Zustand das Objekt zu kontaktieren und mittels einer intrinsischen Vorspannung abzudichten.

Es wird vorgeschlagen, dass der Dichtabschnitt in zumindest einem demontierten Zustand über zumindest einen Großteil seiner Länge einen wenigstens im Wesentlichen konstanten Innendurchmesser (18a, 18b, 18c, 18d, 18e) aufweist.

Hierdurch kann vorteilhaft eine Montage vereinfacht werden. Vorteilhaft kann ein zeitsparender Montagevorgang ermöglicht werden. Insbesondere kann eine preisgünstige Ausgestaltung erreicht werden. Insbesondere kann aufgrund einer vorteilhaften Konstruktion eine Vereinfachung einer Montage erzielt werden. Zudem kann eine über eine gesamte Länge eines Dichtabschnitts optimierte Anpassung an ein eingeführtes längliches Objekt erfolgen.

Unter einer "Dichtvorrichtung" soll insbesondere ein Teil eines Dichtsystems, insbesondere einer Kabelmuffe, verstanden werden, welches insbesondere dazu vorgesehen ist, Kabelkontaktierungsstellen gegenüber Umwelteinflüssen zu schützen. Vorzugsweise umfasst das Dichtsystem die Dichtvorrichtung und zumindest eine Einhausung, besonders vorteilhaft eine Muffenhaube, mit einem Dichtpanel, insbesondere einem Muffenboden, an welchem die Dichtvorrichtung anordenbar ist. Insbesondere kann die Dichtvorrichtung zur Durchführung und Abdichtung von mehr als nur einem einzigen länglichen Objekt, insbesondere von zumindest zwei länglichen Objekten, vorgesehen sein.

Unter einem "länglichen Objekt" soll insbesondere ein Objekt verstanden werden, welches in zumindest einem abgewickelten Zustand eine Ausdehnung entlang einer Haupterstreckungsrichtung aufweist, welche zumindest ein zweifaches, vorteilhaft zumindest ein dreifaches, vorzugsweise zumindest ein fünffaches des Durchmessers des Objekts aufweist, welcher insbesondere quer zur Haupterstreckungsrichtung gemessen ist. Insbesondere kann das längliche Objekt eine Ausgestaltung als Rohr, insbesondere als Einblasrohr und/oder vorzugsweise als Kabel, insbesondere als elektrisches Kabel und/oder besonders vorteilhaft als Glasfaserkabel, aufweisen. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt.

Unter einer "Dichteinheit" soll insbesondere ein Einheit verstanden werden, welche ein Durchdringen von Materie aus einem ersten Bereich in einen zweiten Bereich und umgekehrt und/oder einen Austausch zwischen Materie aus dem ersten und dem zweiten Bereich, zwischen welchen die Dichteinheit zumindest teilweise angeordnet ist, zumindest im Wesentlichen vollständig verhindert. Insbesondere weist die Dichteinheit eine schützende Wirkung gegen Eindringen von Feuchtigkeit und/oder Flüssigkeit auf. Unter "zumindest im Wesentlichen vollständig" soll hier insbesondere verstanden werden, dass ein Durchdringen von Materie aus dem ersten in den zweiten Raum und umgekehrt unterhalb einer für den gedachten Einsatzzweck geeignete und insbesondere gesetzlich und/oder durch Richtlinien festgelegte Leckrate liegt.

Insbesondere weist die Dichteinheit zumindest einen, vorzugsweise genau einen Durchführungskanal für das Objekt auf. Die Dichteinheit kann vorteilhaft zwei, drei oder insbesondere mehrere Durchführungskanäle jeweils für ein Objekt aufweisen. Der Durchführungskanal ist insbesondere dazu vorgesehen, das Objekt aufzunehmen. Insbesondere weist der Durchführungskanal über seine Länge betrachtet einen variablen Durchführungskanaldurchmesser auf. Insbesondere weist der Durchführungskanal eine Länge auf, welche zumindest so groß ist, insbesondere zumindest doppelt so groß ist, vorteilhaft zumindest dreimal so groß ist, wie der maximale Durchführungskanaldurchmesser. Insbesondere weist der Durchführungskanal eine Länge von zumindest 20 mm, vorteilhaft zumindest 30 mm und vorzugsweise zumindest 35 mm auf. Insbesondere beträgt der maximale Durchführungskanaldurchmesser zumindest 5 mm, vorteilhaft zumindest 8 mm und besonders vorteilhaft zumindest 10 mm. Insbesondere weist ein Durchmesser der Dichteinheit über eine Länge der Dichteinheit betrachtet eine variable Größe auf. Insbesondere ist ein maximaler Durchmesser der Dichteinheit zumindest gleich dem maximalen Durchführungskanaldurchmesser, vorzugsweise zumindest gleich einem 1,5 fachen des maximalen Durchführungskanaldurchmessers und/oder bevorzugt zumindest gleich einem 1,9 fachen des maximalen Durchführungskanaldurchmessers. Insbesondere weist der maximale Durchmesser der Dichteinheit einen Wert zwischen 18 mm und 22 mm auf.

Unter einem "Dichtabschnitt" soll insbesondere ein Teil der Dichteinheit verstanden werden, welcher in einem montierten Zustand dazu vorgesehen ist, eine dichtende Wirkung auszuüben. Der Dichtabschnitt ist insbesondere hohlzylinderförmig mit einem Außen- und einem Innendurchmesser und mit einer Außen- und einer Innenfläche ausgebildet. Insbesondere verläuft der Durchführungskanal für das Objekt zumindest teilweise durch den Dichtabschnitt. Insbesondere dichtet der Dichtabschnitt das Objekt innerhalb des Durchführungskanals zumindest in einer Längsrichtung ab. Unter einem "montierten Zustand" soll insbesondere ein Zustand einer Einheit verstanden werden, in welchem einzelne Bestandteile der Einheit derart zusammengesetzt und/oder miteinander verbunden sind, sodass die Einheit zumindest eine ihr zugewiesene Funktion erfüllen und/oder ausführen kann und gleichzeitig eine der Einheit zugedachte Wirkung auf eine weitere Einheit ausüben kann, wobei insbesondere die Einheit die weitere Einheit kontaktiert. Insbesondere entfaltet die Dichteinheit in dem montierten Zustand eine abdichtende Wirkung auf das Objekt, wobei das Objekt in die Dichteinheit eingeführt ist.

Vorteilhaft besteht der Dichtabschnitt zumindest teilweise und vorzugsweise vollständig aus einem kolloidartigen Material. Unter einem "kolloidartigen Material" soll Insbesondere ein Material verstanden werden, welches zumindest eine feste und zumindest eine flüssige und/oder gasförmige Komponente aufweist. Insbesondere ist die feste Komponente als eine schwammartige dreidimensionale Matrix ausgebildet, in welcher die flüssige und/oder gasförmige Komponente verteilt ist. Vorzugsweise ist das kolloidartige Material zumindest teilweise und vorzugsweise vollständig als ein Gel, vorzugsweise als ein Polyurethan-Gel, ausgebildet. Insbesondere ist das kolloidartige Material unter Standardbedingungen formbeständig, wobei das Material zumindest unter einer geringen, insbesondere mechanischen Belastung eine reversible Formänderung vollführt und anschließend bei einer Abwesenheit der Belastung seine ursprüngliche Form annimmt. Insbesondere weist das Material elastische Eigenschaften auf. Vorteilhaft ist das kolloidartige Material insbesondere reversibel verformbar, wobei es eine vor einer Verformung bestehende Form einnimmt. Insbesondere kann das kolloidartige Material seine Ausdehnung insbesondere in mehrere Dimensionen ändern, wobei beispielsweise mit einer Längenänderung der Form des kolloidartigen Materials eine Breitenänderung der Form des kolloidartigen Materials einhergeht.

Unter einer "intrinsischen Vorspannung" soll insbesondere eine Eigenschaft einer Einheit verstanden werden, bei welcher die Einheit bei einem Kontaktieren einer weiteren, abzudichtenden Einheit eine selbstdichtende Funktion entfaltet, ohne Zuhilfenahme von anderen Einheiten.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Dichteinheit zumindest einen weiteren Dichtabschnitt aufweist, welcher dazu vorgesehen ist, in dem montierten Zustand ein von dem länglichen Objekt verschiedenes weiteres längliches Objekt zu kontaktieren und mittels einer intrinsischen Vorspannung abzudichten. Dadurch kann insbesondere eine Abdichtung von mehreren länglichen Objekten vorteilhaft unabhängig voneinander erfolgen. Es ist denkbar, dass die Dichteinheit eine Vielzahl von weiteren Dichtabschnitten aufweist, welche jeweils ein längliches Objekt durchführen und abdichten. Insbesondere sind der Dichtabschnitt und der weitere Dichtabschnitt/die weiteren Dichtabschnitte nebeneinander angeordnet. Vorteilhaft sind der Dichtabschnitt und der weitere Dichtabschnitt/die weiteren Dichtabschnitte identisch ausgebildet und weisen vorteilhaft identische Eigenschaften auf. Alternativ können der Dichtabschnitt und der weitere Dichtabschnitt/die weiteren Dichtabschnitte verschieden ausgebildet sein. Insbesondere besteht der weitere Dichtabschnitt zumindest teilweise und vorzugsweise vollständig aus einem kolloidartigen Material.

. Insbesondere liegt der Dichtabschnitt und/oder der weitere Dichtabschnitt über seine gesamte Länge in einem am länglichen Objekt montierten Zustand der Dichteinheit dicht an dem länglichen Objekt an. Insbesondere übt der Dichtabschnitt und/oder der weitere Dichtabschnitt in dem montierten Zustand ein radial nach innen gerichteten Druck auf das längliche Objekt in einem montierten Zustand aus. Vorteilhaft liegt der Druck in dem montierten Zustand über die gesamte Länge des Dichtabschnitts und/oder der weiteren Dichtabschnitte dauerhaft an.

Unter einem "demontierten Zustand" soll insbesondere ein Zustand einer Einheit verstanden werden, in welchem die Einheit wirkungs- und/oder funktionslos insbesondere gegenüber einer weiteren Einheit ist und/oder die Einheit und die weitere Einheit kontaktlos sind.

Zudem wird vorgeschlagen, dass der Dichtabschnitt und/oder der weitere Dichtabschnitt in zumindest einem demontierten Zustand jeweils über zumindest einen Großteil seiner Länge einen wenigstens im Wesentlichen konstanten Außendurchmesser aufweist. Dadurch kann insbesondere eine gleichmäßige Dichtwirkung auf das längliche Objekt in dem montierten Zustand erreicht werden, vorzugsweise an jedem Kontaktpunkt zwischen dem Dichtabschnitt und/oder dem weiteren Dichtabschnitt und dem länglichen Objekt in dem montierten Zustand. Insbesondere ist der Außendurchmesser des Dichtabschnitts und/oder des weiteren Dichtabschnitts größer als die Länge des Dichtabschnitts und/oder des weiteren Dichtabschnitts.

Ferner wird vorgeschlagen, dass die Dichteinheit zumindest einen Kabeleinführabschnitt zur Einführung des Objekts aufweist. Alternativ kann die Dichteinheit vorteilhaft zwei, insbesondere mehrere Kabeleinführabschnitte jeweils zur Einführung eines Objekts aufweisen. Hierdurch kann insbesondere eine Einführhilfe für einen Techniker bei einer Montage bereitgestellt werden, wodurch eine Zeitersparnis erzielt werden kann. Insbesondere kann dadurch eine Prozesssicherheit bei der Montage vorteilhaft erhöht werden. Insbesondere sind der Kabeleinführabschnitt/die Kabeleinführabschnitte und der Dichtabschnitt und/oder der weitere Dichtabschnitt einstückig miteinander verbunden. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und/oder durch Herstellung in einem Druckverfahren und vorteilhaft aus einem einzelnen Rohling. Der Kabeleinführabschnitt/die Kabeleinführabschnitte ist/sind insbesondere als Hohlkörper ausgebildet. Insbesondere weist/weisen der Kabeleinführabschnitt/die Kabeleinführabschnitte entlang seiner/ihrer jeweiligen Haupterstreckungsrichtung einen unterschiedlichen Außen- und/oder Innendurchmesser auf. Insbesondere weist/weisen der Kabeleinführabschnitt/die Kabeleinführabschnitte im Mittel jeweils einen größeren Außen- und/oder Innendurchmesser als ein Außen- und/oder Innendurchmessen des Dichtabschnitts und/oder der weiteren Dichtabschnitte auf. Insbesondere weist/weisen der Kabeleinführabschnitt/die Kabeleinführabschnitte jeweils einen größeren Innendurchmesser im Vergleich zu einem Durchmesser des länglichen Objekts/der länglichen Objekte auf. Der Kabeleinführabschnitt/die Kabeleinführabschnitte weist/weisen jeweils insbesondere eine konische Form auf, welche sich in Richtung des Dichtabschnitts und/oder der weiteren Dichtabschnitte verjüngt. Vorzugsweise zentriert/zentrieren der Kabeleinführabschnitt/die Kabeleinführabschnitte das jeweilige längliche Objekt bei einem Einführvorgang.

Des Weiteren wird vorgeschlagen, dass der Dichtabschnitt und/oder der weitere Dichtabschnitt und/oder der Kabeleinführabschnitt/die Kabeleinführabschnitte jeweils eine rotationssymmetrische Außen- und/oder Innenfläche aufweist/aufweisen. Hierdurch kann insbesondere eine kostengünstige Herstellung ermöglicht werden. Der Dichtabschnitt und/oder der weitere Dichtabschnitt und/oder der Kabeleinführabschnitt/die Kabeleinführabschnitte weisen jeweils insbesondere eine Rotationssymmetrieachse für beliebige Rotationswinkel auf. Der Dichtabschnitt und/oder der weitere Dichtabschnitt und/oder der Kabeleinführabschnitt/die Kabeleinführabschnitte sind insbesondere jeweils als Hohlkörper ausgebildet. Die Innenfläche des Dichtabschnitts und/oder der weiteren Dichtabschnitte und des Kabeleinführabschnitts/der Kabeleinführabschnitte begrenzen jeweils insbesondere einen Hohlraum der Dichteinheit, welcher insbesondere dazu vorgesehen ist, das längliche Objekt aufzunehmen. Der Hohlraum ist insbesondere entlang der Rotationssymmetrieachse ausgedehnt. Insbesondere weist/weisen der Kabeleinführabschnitt/die Kabeleinführabschnitte jeweils einen ersten Abschnitt, welcher zylinderförmig ausgebildet ist, und einen zweiten Abschnitt, welcher eine rotationssymmetrische, eng zulaufende Gestalt, beispielsweise eine kegelstumpfförmige oder eine paraboloidförmige Gestalt, aufweist. Die Gestalt des Kabeleinführabschnitts/der Kabeleinführabschnitte ist insbesondere dazu vorgesehen, die Dichteinheit und/oder das längliche Objekt innerhalb der Dichteinheit insbesondere bei einem Einführvorgang auszurichten und vorzugsweise zu zentrieren. Dadurch kann insbesondere ein Montagevorgang erleichtert werden. Vorzugsweise ist/sind der Kabeleinführabschnitt/die Kabeleinführabschnitte und der Dichtabschnitt und/oder der weitere Dichtabschnitt einstückig miteinander verbunden. Insbesondere sind der Kabeleinführabschnitt/die Kabeleinführabschnitte und der Dichtabschnitt und/oder der weitere Dichtabschnitt zumindest teilweise aus einem gleichen Material ausgebildet.

Darüber hinaus wird vorgeschlagen, dass der Kabeleinführabschnitt/die Kabeleinführabschnitte jeweils zumindest ein Weichelement und jeweils zumindest ein Stabilisierungselement mit einer höheren Festigkeit als das Weichelement aufweist/aufweisen. Vorteilhaft sind die Stabilisierungselemente identisch ausgebildet. Hierdurch kann insbesondere eine vorteilhafte Handhabung ermöglicht werden. Vorteilhaft besteht das Weichelement auf dem kolloidartigen Material. Insbesondere bildet das Weichelement eine Außenschicht des Kabeleinführabschnitts/der Kabeleinführabschnitte und definiert insbesondere die Außenfläche des Kabeleinführabschnitts/der Kabeleinführabschnitte. Insbesondere weist/weisen das Stabilisierungselement/die Stabilisierungselemente jeweils zumindest im Wesentlichen eine rotationssymmetrische, eng zulaufende Form auf, welche der Gestalt des jeweiligen ersten und des jeweiligen zweiten Abschnitts des Kabeleinführabschnitts/der Kabeleinführabschnitte entspricht. Vorteilhaft bildet/bilden das Stabilisierungselement/die Stabilisierungselemente jeweils eine Innenschicht des Kabeleinführabschnitts/der Kabeleinführabschnitte und definiert/definieren insbesondere die Innenfläche des Kabeleinführabschnitts/der Kabeleinführabschnitte. Das Stabilisierungselement/die Stabilisierungselemente ist/sind jeweils insbesondere vollständig innerhalb des Kabeleinführabschnitts/der Kabeleinführabschnitte angeordnet. Das Stabilisierungselement/die Stabilisierungselemente kann/können jeweils insbesondere aus einem thermoplastischen Kunststoff hergestellt sein. Alternativ kann/können das Stabilisierungselement/die Stabilisierungselemente jeweils aus einem metallischen Material oder einem Kompositwerkstoff hergestellt sein. Das Stabilisierungselement/die Stabilisierungselemente jeweils ist/sind insbesondere zur Stabilisierung des Kabeleinführabschnitts/der Kabeleinführabschnitte gegenüber einer radialen Belastung vorgesehen. Alternativ oder zusätzlich kann/können das Stabilisierungselement/die Stabilisierungselemente jeweils dazu vorgesehen sein, das längliche Objekt zu fixieren und/oder als Druckabstreifer zum Abstreifen, beispielsweise von Schmutzpartikeln bei dem Einführvorgang von dem länglichen Objekt, zu fungieren.

Weiterhin wird vorgeschlagen, dass das Stabilisierungselement/die Stabilisierungselemente jeweils zumindest einen ersten Stabilisierungsabschnitt und zumindest einen kammartig ausgebildeten zweiten Stabilisierungsabschnitt aufweist. Dadurch kann insbesondere eine flexible Stabilisierung erzielt werden. Insbesondere ist das erste Stabilisierungsabschnitt zylinderförmig ausgebildet. Vorteilhaft weist der zweite Stabilisierungsabschnitt eine höhere Flexibilität als der erste Stabilisierungsabschnitt auf, insbesondere aufgrund einer Geometrie. Insbesondere können sich während des Einführvorgangs einzelne Zinken des kammartig ausgebildeten zweiten Abschnitts nach außen biegen und damit einen Durchmesser des zweiten Stabilisierungsabschnitts vergrößern. Insbesondere bildet der jeweilige zweite Stabilisierungsabschnitt des Stabilisierungselements/der Stabilisierungselemente einen Übergang zu dem Dichtabschnitt und/oder den weiteren Dichtabschnitten.

Außerdem wird vorgeschlagen, dass die Dichteinheit einstückig ausgebildet ist. Hierdurch kann insbesondere ein erleichterter Montagevorgang ermöglicht werden. Dadurch kann insbesondere eine robuste Konstruktion gegenüber Zug- und/oder Scherbelastungen erreicht werden. Insbesondere sind das Weichelement und das Stabilisierungselement/die Stabilisierungselemente jeweils einstückig miteinander verbunden. Insbesondere sind das Weichelement und das Stabilisierungselement/die Stabilisierungselemente untrennbar miteinander verbunden.

Hierdurch kann insbesondere eine Austauschbarkeit der Dichteinheit erleichtert werden.

Zudem wird vorgeschlagen, dass die Dichteinheit mittels eines Mehrkomponentenspritzverfahrens, vorzugsweise mittels eines Zweikomponentenspritzverfahrens, hergestellt ist. Hierdurch kann insbesondere eine kostengünstige Herstellung ermöglicht werden. Alternativ kann die Dichteinheit mittels eines Druckverfahrens hergestellt sein. Insbesondere kann die Dichteinheit in einem Herstellungsschritt hergestellt sein.

Ferner wird vorgeschlagen, dass die Dichtvorrichtung ein Verbindungselement zur Herstellung einer Verbindung der Dichteinheit mit einem Dichtpanel aufweist, wobei das Verbindungselement insbesondere dazu vorgesehen ist, die Dichteinheit in einem verbundenen Zustand an das Dichtpanel zu pressen. Hierdurch kann insbesondere eine vorteilhafte Abdichtung zwischen der Dichteinheit und dem Dichtpanel hergestellt werden. Insbesondere weist das Verbindungselement zumindest ein Rastelement zur Herstellung einer Rastverbindung zwischen dem Verbindungselement und dem Dichtpanel auf. Vorteilhaft weist das Rastelement eine Rastnase auf. Insbesondere durch die Herstellung der Rastverbindung presst das Verbindungselement ein Randelement des Kabeleinführabschnitts/der Kabeleinführabschnitte gegen das Dichtpanel, wodurch vorteilhaft eine Abdichtung stattfindet. Das Verbindungselement ist insbesondere aus einem härteren Material gebildet als das Weichelement der Dichteinheit.

Ferner wird vorgeschlagen, dass das Verbindungselement separat von der Dichteinheit, insbesondere separat von dem Stabilisierungselement/den Stabilisierungselementen, ausgebildet ist. Hierdurch kann insbesondere eine kostengünstige Ersatzteilbeschaffung ermöglicht werden. Insbesondere kann eine Verriegelung der Dichtvorrichtung innerhalb eines Dichtsystems, insbesondere einer Kabelmuffe, ermöglicht werden, wodurch eine Zuverlässigkeit gesteigert werden kann. Insbesondere ist das Verbindungselement auf die Dichteinheit aufschiebbar und kontaktiert die Dichteinheit zumindest im Wesentlichen im Bereich des Kabeleinführabschnitts/der Kabeleinführabschnitte. In dem montierten Zustand der Dichteinheit ist insbesondere das Randelement entgegen einer Einführrichtung des länglichen Elements durch das Verbindungselement mit einem Druck beaufschlagt. Unter einer "Einführrichtung" soll insbesondere eine Richtung verstanden werden, welche parallel zu dem Durchführungskanal verläuft und von dem Kabeleinführabschnitt/den Kabeleinführabschnitten zu dem Dichtabschnitt und/oder den weiteren Dichtabschnitten zeigt.

Alternativ kann das Verbindungselement mit der Dichteinheit, insbesondere einteilig, verbunden sein. Dadurch kann insbesondere eine Vereinfachung der Montage erreicht werden. Zudem kann insbesondere eine Bauteilanzahl reduziert werden. In dem montierten Zustand der Dichteinheit ist insbesondere das Randelement in der Einführrichtung des länglichen Elements durch das Verbindungselement mit einem Druck beaufschlagt. Insbesondere bildet ein zylindrischer Bereich des Verbindungselements mit dem Kabeleinführabschnitt/den Kabeleinführabschnitten der Dichteinheit einen Einführabschnitt für das längliche Objekt. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt.

Des Weiteren wird vorgeschlagen, dass das Verbindungselement zumindest einen Zugentlastungsabschnitt zur Bereitstellung einer Zugentlastung des Objekts aufweist. Hierdurch kann insbesondere eine unvorteilhafte Zug- und/oder Druckbelastung auf das längliche Objekt vermieden werden. Insbesondere kann der Zugentlastungsabschnitt das Objekt mittels eines Form- und/oder Kraftschlusses an der Dichteinheit befestigen. Vorteilhaft weist der Zugentlastungsabschnitt zumindest ein Klemmelement auf, welches dazu vorgesehen ist, das längliche Objekt, insbesondere ein Kabel, mittels zumindest einer Klemmverbindung zu befestigen. Insbesondere kontaktiert das Klemmelement das längliche Objekt vorzugsweise in Umfangsrichtung. Das Klemmelement ist insbesondere plastisch verformbar. Die Klemmverbindung ist insbesondere lösbar.

In einer weiteren Ausgestaltung wird darüber hinaus vorgeschlagen, dass das Verbindungselement mit dem Stabilisierungselement/den Stabilisierungselementen verbunden ist. Hierdurch kann insbesondere eine einfache und/oder zeitsparende Montage ermöglicht werden. Zudem kann insbesondere eine Bauteilanzahl reduziert werden. Vorteilhaft ist das Verbindungselement mit dem Stabilisierungselement/den Stabilisierungselementen jeweils einstückig verbunden. Insbesondere bestehen das Verbindungselement und das Stabilisierungselement/die Stabilisierungselemente aus einem gleichen Material, welches härter ist als das Weichelement.

Zudem wird ein Dichtsystem mit einer Dichtvorrichtung und mit zumindest einem Dichtpanel, insbesondere einem Muffenboden, vorgeschlagen, welches zumindest eine Aufnahme aufweist, in welcher die Dichteinheit zumindest teilweise anordenbar ist. Vorteilhaft weist das Dichtpanel mehrere Aufnahmen zur Aufnahme von jeweils einer Dichteinheit auf. Hierdurch kann insbesondere eine vorteilhafte Anordnung und Abdichtung der Dichteinheit und des länglichen Objekts, vorteilhaft von mehreren Dichteinheiten und von mehreren länglichen Objekten, erreicht werden. Die Aufnahmen können insbesondere unterschiedliche Formen und/oder Durchmesser und/oder Größen aufweisen. Insbesondere weist das Dichtpanel zu jeder Aufnahme ein Verschlusselement auf, wobei die Aufnahme durch das Verschlusselement verschlossen ist und insbesondere abgedichtet ist. Das Verschlusselement ist insbesondere mit dem Dichtpanel entfernbar verbunden, wodurch die Dichtvorrichtung in der jeweiligen Aufnahme anordenbar ist. Im Falle einer Montage der Dichtvorrichtung ist insbesondere das Verschlusselement durch einen Monteur irreversibel entfernbar. Die Aufnahme ist insbesondere durch die darin angeordnete Dichtvorrichtung abgedichtet. Weitere Aufnahmen bleiben vorteilhaft verschlossen, wenn darin keine Dichtvorrichtungen angeordnet sind.

Ferner geht die Erfindung aus von einem Verfahren zur Abdichtung zumindest eines länglichen Objekts gegenüber einem Dichtpanel mit einer Dichtvorrichtung mit zumindest einer Dichteinheit, durch welche das Objekt, insbesondere zwei Objekte, in einem montierten Zustand zumindest abschnittsweise vollständig in Umfangsrichtung umschlossen wird und welche zumindest einen Dichtabschnitt und insbesondere einen weiteren Dichtabschnitt aufweist, durch welchen/welche das Objekt/die Objekte in dem montierten Zustand kontaktiert/kontaktieren und mittels einer intrinsischen Vorspannung insbesondere des Dichtabschnitts und/oder der weiteren Dichtabschnitte abgedichtet wird.

Es wird vorgeschlagen, dass die Dichteinheit auf das Objekt, insbesondere auf die Objekte, geschoben und anschließend insbesondere mittels eines Verbindungselements mit einem Dichtpanel verbunden wird. Hierdurch kann insbesondere eine Montage verbessert und/oder vereinfacht werden.

Die erfindungsgemäße Dichtvorrichtung soll hierbei nicht auf die oben beschriebene Anwendung und Ausführungsform beschränkt sein. Insbesondere kann die erfindungsgemäße Dichtvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Einen Teil eines Dichtsystems mit einem als Muffenboden ausgebildeten Dichtpanel und mit einer Dichtvorrichtung in einem montierten Zustand,
- Fig. 2: eine perspektivische Explosionsdarstellung der Dichtvorrichtung,
- Fig. 3: eine perspektivische Darstellung einer an einem länglichen Objekt montierten Dichteinheit der Dichtvorrichtung,
- Fig. 4: eine Schnittdarstellung der Dichteinheit,
- Fig. 5: ein Ablaufdiagramm eines Verfahrens zur Abdichtung des länglichen Objekts,
- Fig. 6: ein alternatives Dichtsystem mit einer weiteren Dichtvorrichtung,
- Fig. 7: eine perspektivische Explosionsdarstellung der weiteren Dichtvorrichtung aus Fig. 6,
- Fig. 8: eine Teilschnittdarstellung des alternativen Dichtsystems aus Fig. 6,
- Fig. 9: eine perspektivische Explosionsdarstellung einer weiteren Dichtvorrichtung,
- Fig. 10: eine perspektivische Explosionsdarstellung einer weiteren Dichtvorrichtung,
- Fig. 11: ein weiteres alternatives Dichtsystem mit einer weiteren alternativen Dichtvorrichtung,
- Fig. 12: eine perspektivische Explosionsdarstellung der weiteren alternativen Dichtvorrichtung und
- Fig. 13: eine perspektivische Schnittdarstellung der weiteren alternativen Dichtvorrichtung in einem montierten Zustand.

### Beschreibung der Ausführungsbeispiele

In der folgenden Beschreibung sind verschiedene Bauteile und/oder Einheiten mehrfach vorhanden. Analog ausgestaltete Bauteile und/oder Einheiten sind zur Vereinfachung in der nachfolgenden Figurenbeschreibung nur einmal beschrieben.

Von mehrfach vorhandenen Objekten ist in den Figuren jeweils lediglich eines mit einem Bezugszeichen versehen.

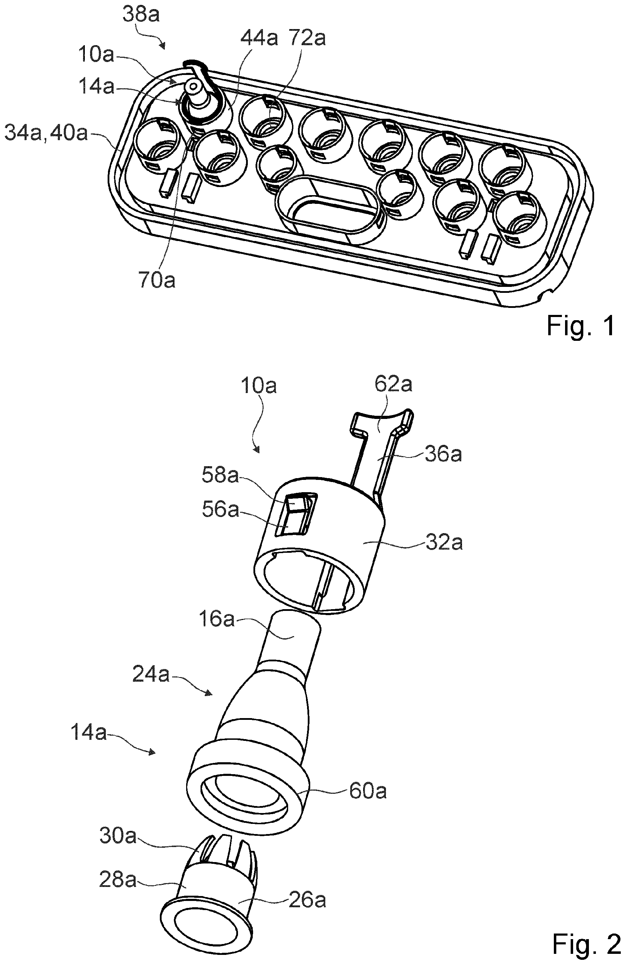

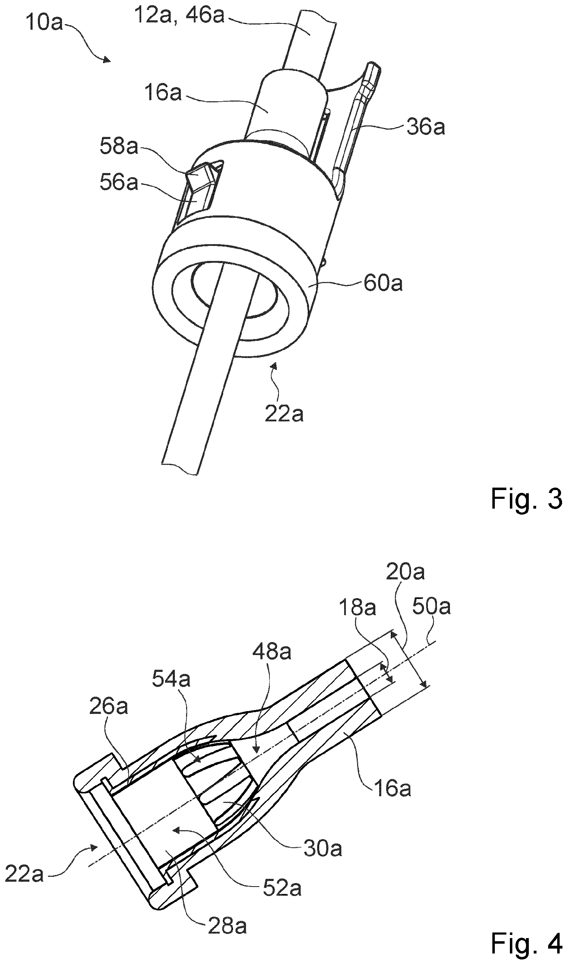

Fig. 1 zeigt einen Teil eines Dichtsystems 38a mit einer Dichtvorrichtung 10a und mit einem Dichtpanel 34a. Die Dichtvorrichtung 10a ist zur Durchführung und Abdichtung eines länglichen Objekts 12a vorgesehen (vgl. Fig. 3). Das Objekt 12a ist als Kabel 46a ausgebildet.

Die Dichtvorrichtung 10a weist eine Dichteinheit 14a auf (vgl. Fig. 2 und Fig. 3). Die Dichteinheit 14a ist einstückig ausgebildet. Die Dichteinheit 14a umschließt das Objekt 12a in einem montierten Zustand abschnittsweise vollständig in Umfangsrichtung (vgl. Fig. 3).

Das Dichtpanel 34a ist als Muffenboden 40a mit mehreren Aufnahmen 44a ausgebildet (vgl. Fig. 1). Die Dichtvorrichtung 10a ist in einer der Aufnahmen 44a angeordnet. Die Dichteinheit 14a ist in einer der Aufnahmen 44a angeordnet. Die Aufnahmen 44a sind dazu vorgesehen, jeweils eine Dichtvorrichtung 10a aufzunehmen. Die Aufnahmen 44a können unterschiedliche Formen aufweisen. Jede Aufnahme 44a ist durch ein jeweiliges Verschlusselement 72a des Dichtpanels 34a verschlossen. Die Aufnahme 44a ist durch das Verschlusselement 72a abgedichtet. Das Verschlusselement 72a ist mit dem Dichtpanel 34a entfernbar verbunden. Im Falle einer Montage der Dichtvorrichtung 10a ist das Verschlusselement 72a durch einen Monteur irreversibel entfernbar. Die Aufnahme 44a mit der darin angeordneten Dichtvorrichtung 10a ist durch diese Dichtvorrichtung 10a abgedichtet. Weitere Aufnahmen 44a bleiben verschlossen.

Die Dichteinheit 14a weist eine rotationssymmetrische Außenfläche auf. Die Dichteinheit 14a weist eine rotationssymmetrische Innenfläche auf. Die Innenfläche der Dichteinheit 14a begrenzt einen Hohlraum 48a. Der Hohlraum 48a ist dazu vorgesehen, das Objekt 12a aufzunehmen. Der Hohlraum 48a ist entlang einer Rotationssymmetrieachse 50a ausgedehnt (vgl. Fig. 3 und Fig. 4).

Die Dichteinheit 14a weist einen Dichtabschnitt 16a auf. Der Dichtabschnitt 16a ist hohlzylinderförmig ausgebildet. Der Dichtabschnitt 16a weist eine rotationssymmetrische Außenfläche auf. Der Dichtabschnitt 16a weist in einem demontierten Zustand über einen Großteil seiner Länge einen konstanten Außendurchmesser 20a auf. Der Dichtabschnitt 16a weist eine rotationssymmetrische Innenfläche auf. Der Dichtabschnitt 16a weist in dem demontierten Zustand über zumindest einen Großteil seiner Länge einen konstanten Innendurchmesser 18a auf. Der Dichtabschnitt 16a kontaktiert im montierten Zustand das Objekt 12a. Der Dichtabschnitt 16a dichtet das Objekt 12a mittels einer intrinsischen Vorspannung ab (vgl. Fig. 3).

Der Dichtabschnitt 16a besteht vorliegend aus einem kolloidartigen Material. Das kolloidartige Material ist als ein Gel ausgebildet. Das kolloidartige Material ist als Polyurethan-Gel ausgebildet.

Die Dichteinheit 14a weist einen Kabeleinführabschnitt 22a auf. Der Kabeleinführabschnitt 22a ist zur Einführung zumindest des Objekts 12a vorgesehen. Fig. 4 zeigt eine Schnittdarstellung der Dichteinheit 14a. Der Kabeleinführabschnitt 22a ist als Hohlkörper ausgebildet. Der Kabeleinführabschnitt 22a weist eine rotationssymmetrische Außenfläche auf. Der Kabeleinführabschnitt 22a weist eine rotationssymmetrische Innenfläche auf. Insbesondere weist der Kabeleinführabschnitt 22a einen ersten Abschnitt 52a und einen zweiten Abschnitt 54a auf. Der erste Abschnitt 52a ist zylinderförmig ausgebildet. Der zweite Abschnitt 54a weist eine kegelstumpfförmige Gestalt auf.

Der Kabeleinführabschnitt 22a weist ein Weichelement 24a auf. Das Weichelement 24a besteht vorliegend aus dem kolloidartigen Material. Fig. 2 zeigt eine perspektivische Explosionsdarstellung der Dichtvorrichtung 10a. Der Kabeleinführabschnitt 22a weist ein Stabilisierungselement 26a auf (vgl. Fig. 2 und Fig. 3). Das Stabilisierungselement 26a und das Weichelement 24a sind einstückig miteinander verbunden. Lediglich zum Zwecke einer übersichtlicheren Darstellung sind das Stabilisierungselement 26a und das Weichelement 24a getrennt voneinander dargestellt. Das Stabilisierungselement 26a weist eine höhere Festigkeit als das Weichelement 24a auf. Das Stabilisierungselement 26a ist vollständig innerhalb des Kabeleinführabschnitts 22a angeordnet.

Das Stabilisierungselement 26a weist einen ersten Stabilisierungsabschnitt 28a und einen zweiten Stabilisierungsabschnitt 30a auf. Der erste Stabilisierungsabschnitt 28a ist hohlzylinderförmig ausgebildet. Der zweite Stabilisierungsabschnitt 30a ist kammartig ausgebildet. Der zweite Stabilisierungsabschnitt 30a weist eine eng zulaufende Form auf. Der zweite Stabilisierungsabschnitt 30a ist kegelstumpfförmig ausgebildet. Alternativ kann der zweite Stabilisierungsabschnitt 30a paraboloidförmig ausgebildet sein.

Die Dichteinheit 14a ist mittels eines Mehrkomponentenspritzverfahrens hergestellt. Der Kabeleinführabschnitt 22a und der Dichtabschnitt 16a sind einstückig miteinander verbunden. Das Weichelement 24a ist Teil des Kabeleinführabschnitts 22a und Teil des Dichtabschnitts 16a. Das Weichelement 24a und das Stabilisierungselement 26a sind einstückig miteinander verbunden.

Die Dichtvorrichtung 10a weist ein Verbindungselement 32a auf (vgl. Fig. 2 und Fig. 4). Das Verbindungselement 32a ist separat von der Dichteinheit 14a ausgebildet. Das Verbindungselement 32a ist an dem Kabeleinführabschnitt 22a anordenbar.

Das Verbindungselement 32a stellt eine Verbindung zwischen der Dichteinheit 14a und dem Dichtpanel 34a her. Das Verbindungselement 32a presst die Dichteinheit 14a an das Dichtpanel 34a.

Der Kabeleinführabschnitt 22a weist ein Randelement 60a auf. Das Randelement 60a ist an einem Ende des Kabeleinführabschnitts 22a angeordnet. Das Randelement 60a kontaktiert in dem montierten Zustand das Dichtpanel 34a. In dem montierten Zustand presst das Verbindungselement 32a das Randelement 60a an das Dichtpanel 34a. Das Verbindungselement 32a stellt eine Abdichtung zwischen der Dichteinheit 14a und dem Dichtpanel 34a her. Das Verbindungselement 32a ist aus einem härteren Material als das Weichelement 24a ausgebildet. Das Verbindungselement 32a ist aus einem härteren Material als das Randelement 60a ausgebildet.

Das Verbindungselement 32a weist ein erstes und ein zweites Rastelement 56a auf. Die Rastelemente 56a sind zur Herstellung einer Rastverbindung zwischen dem Verbindungselement 32a und dem Dichtpanel 34a vorgesehen. Das Rastelement 56a weist eine Rastnase 58a auf. Das Rastelement 56a greift in dem montierten Zustand in eine dazu komplementäre Öffnung 70a am Dichtpanel 34a ein.

Das Verbindungselement 32a weist einen Zugentlastungsabschnitt 36a auf. Der Zugentlastungsabschnitt 36a ist zur Bereitstellung einer Zugentlastung des Objekts 12a vorgesehen.

Der Zugentlastungsabschnitt 36a weist ein Klemmelement 62a auf. Das Klemmelement 62a befestigt das Objekt 12a mittels einer Klemmverbindung in Umfangsrichtung des Objekts 12a. Das Klemmelement 62a ist zur Herstellung der Klemmverbindung plastisch verformbar. Die Klemmverbindung ist lösbar.

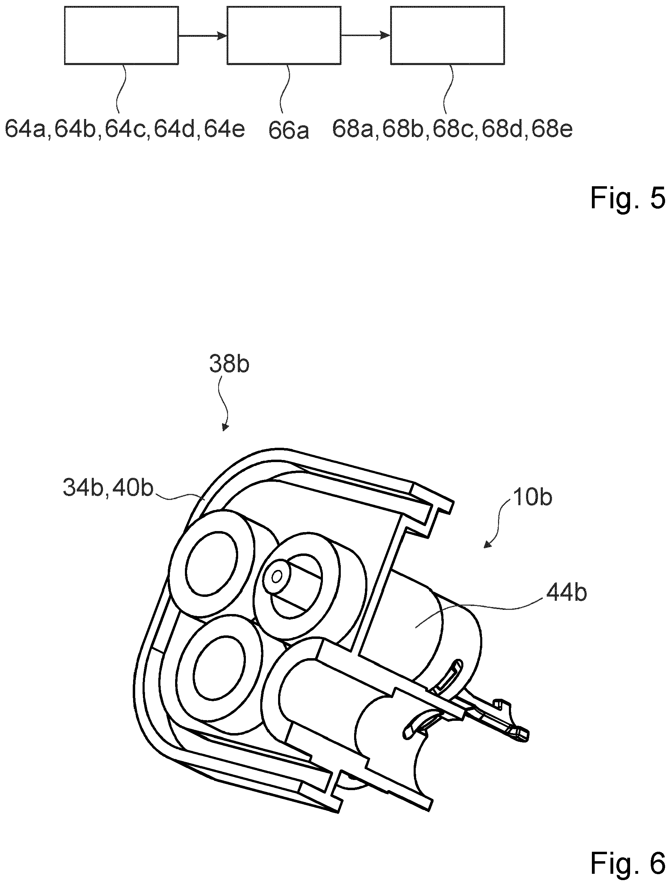

Fig. 5 zeigt ein Ablaufdiagramm eines Verfahrens zur Abdichtung des Objekts 12a gegenüber dem Dichtpanel 34a mit der Dichtvorrichtung 10a mit der Dichteinheit 14a. In einem Einführschritt 64a wird die Dichteinheit 14a auf das Objekt 12a geschoben. Mittels eines Zwischenschritts 66a wird das Verbindungselement 32a auf die Dichteinheit 14a geschoben und mittels eines Kraftschlusses und/oder Formschlusses an der Dichteinheit 14a angeordnet. In einem Einrastschritt 68a wird die Dichteinheit 14a mittels des Verbindungselements 32a mit dem Dichtpanel 34a mittels einer Rastverbindung verbunden.

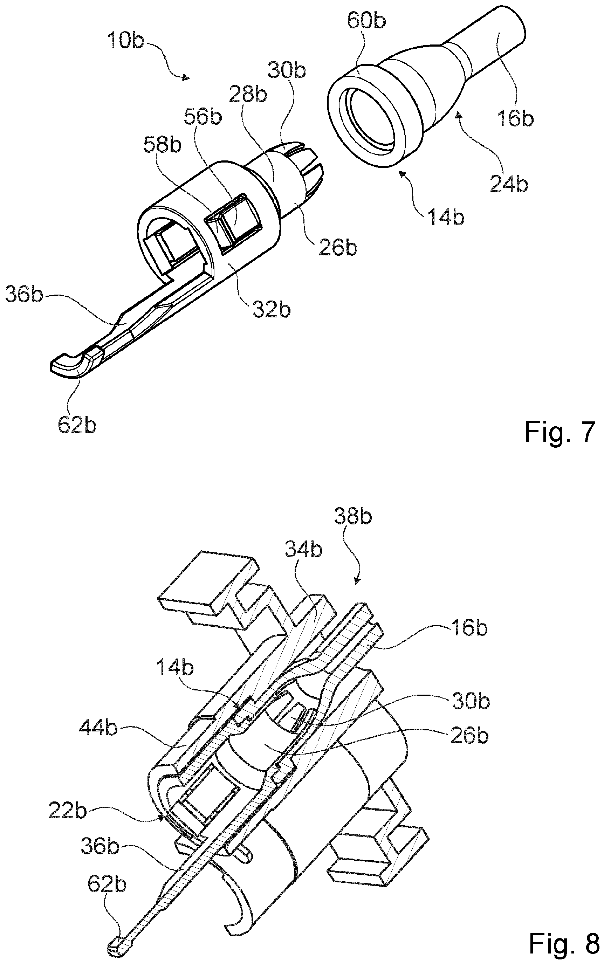

Fig. 6 bis 8 zeigen ein alternatives Ausführungsbeispiel des Dichtsystems 38b. Zur Vermeidung unnötiger Wiederholungen werden daher für gleiche Baugruppen gleiche Bezugszeichen verwendet und es wird auf die Ausführungen der Fig. 1 bis 5 verwiesen. Nachfolgend wird nur auf die Details eingegangen, durch die sich die Ausführung der Fig. 1 bis 5 von der alternativen Ausführung der Fig. 6 bis 8 unterscheidet. Zur Unterscheidung der Ausführungsbeispiele ist der Buchstabe a in den Bezugszeichen des Ausführungsbeispiels in den Figuren 1 bis 5 durch den Buchstaben b in den Bezugszeichen des Ausführungsbeispiels der Figuren 6 bis 8 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 5 verwiesen werden.Fig. 6 zeigt ein alternatives Dichtsystem 38b mit der Dichtvorrichtung 10b. Die Dichtvorrichtung 10b weist die Dichteinheit 14b und das Verbindungselement 32b auf. Die Dichtvorrichtung 10b ist in der Aufnahme 44b des Dichtpanels 34b angeordnet (vgl. Fig. 6 und Fig. 8). Fig. 7 zeigt eine perspektivische Explosionsdarstellung der Dichtvorrichtung 10b des alternativen Dichtsystems 38b. Das Stabilisierungselement 26b und das Weichelement 24b sind einstückig miteinander verbunden. Lediglich zum Zwecke einer übersichtlicheren Darstellung sind das Stabilisierungselement 26b und das Weichelement 24b getrennt voneinander dargestellt. Das Verbindungselement 32b ist mit dem Stabilisierungselement 26b einteilig verbunden. Das Verbindungselement 32b des alternativen Dichtsystems 38b ist dem Verbindungselement 32b entgegengesetzt orientiert. Die Dichtvorrichtung 10b ist einteilig ausgebildet. Das Verbindungselement 32b ist an dem Dichtpanel 34b an einer Außenseite eines Muffenbodens 40b angeordnet.

Bei einem Verfahren zur Abdichtung des Objekts 12b gegenüber dem Dichtpanel 34b mit der Dichtvorrichtung 10b mit der Dichteinheit 14b des alternativen Dichtsystems 38b werden der Einführschritt 64b und der Einrastschritt 68b ausgeführt (vgl. Fig. 5). Bei dem Verfahren entfällt der Zwischenschritt 66a.

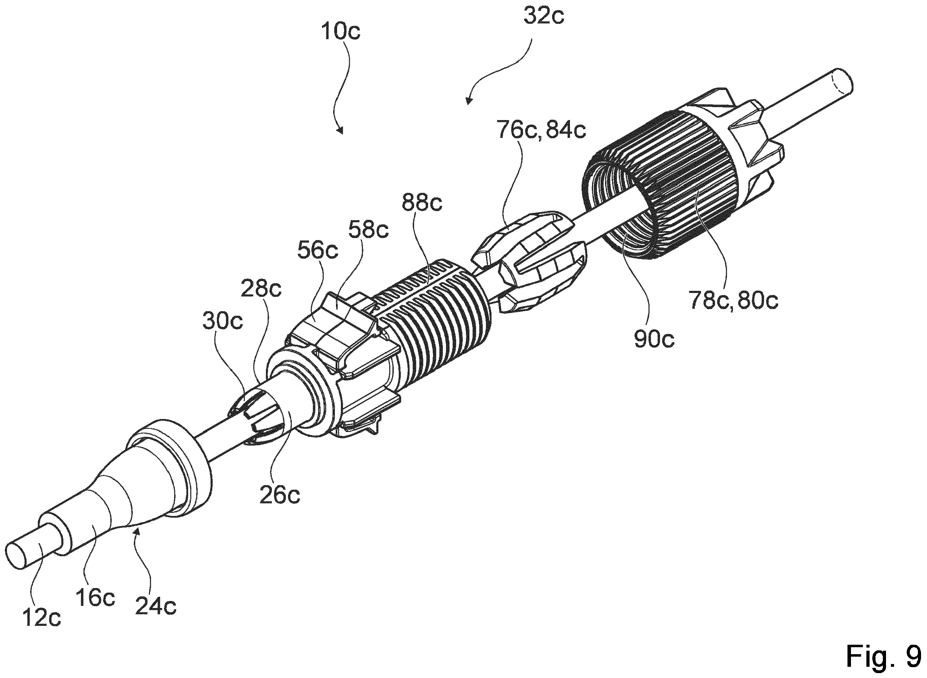

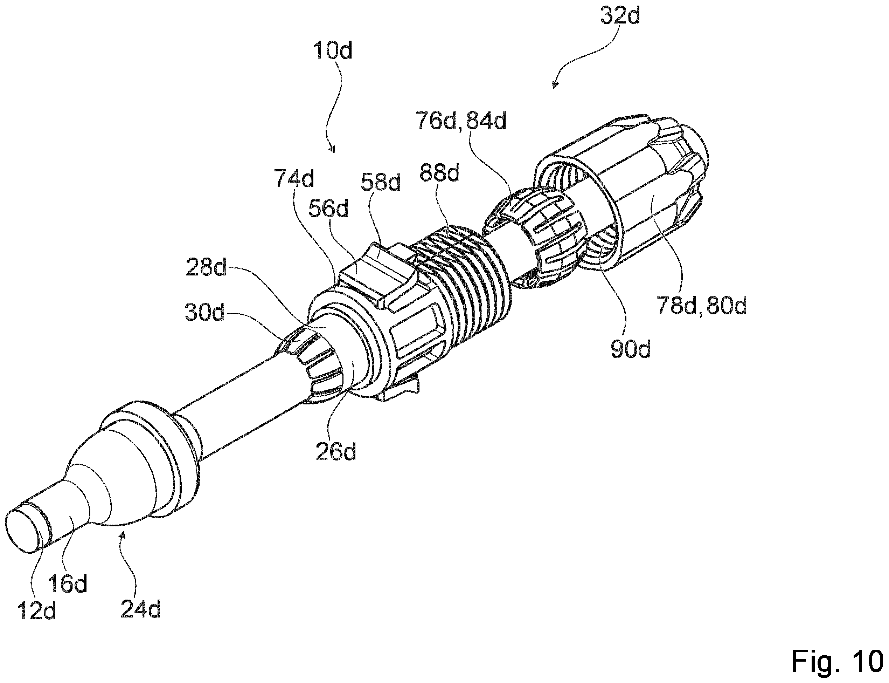

Fig. 9 und 10 zeigen zwei weitere Ausführungsbeispiele eines Dichtsystems 38c, 38d. Zur Vermeidung unnötiger Wiederholungen werden daher für gleiche Baugruppen gleiche Bezugszeichen verwendet und es wird auf die Ausführungen der Fig. 1 bis 5 und der Fig. 6 bis 8 verwiesen. Nachfolgend wird nur auf die Details eingegangen, durch die sich die Ausführung der Fig. 1 bis 5 und der Fig. 6 bis 8 von den weiteren Ausführungen der Fig. 9 und 10 unterscheidet. Zur Unterscheidung der Ausführungsbeispiele ist der Buchstabe a in den Bezugszeichen des Ausführungsbeispiels in den Figuren 1 bis 5 und der Buchstabe b in den Bezugszeichen des Ausführungsbeispiels in den Figuren 6 bis 8 durch den Buchstaben c in den Bezugszeichen des Ausführungsbeispiels der Figur 9 und den Buchstaben d in den Bezugszeichen des Ausführungsbeispiels der Figur 10 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 8 verwiesen werden.

Fig. 9 zeigt eine alternative Dichtvorrichtung 10c in einer perspektivischen Explosionsdarstellung mit einem länglichen Objekt 12c. Die Dichtvorrichtung 10c ist in einer Aufnahme 44c eines Dichtpanels 34c anordenbar. Ein Stabilisierungselement 26c und ein Weichelement 24c sind einstückig miteinander verbunden. Lediglich zum Zwecke einer übersichtlicheren Darstellung sind das Stabilisierungselement 26c und das Weichelement 24c getrennt voneinander dargestellt.

Ein Zugentlastungsabschnitt 36c ist mehrteilig ausgebildet. Der Zugentlastungsabschnitt 36c ist dreiteilig ausgebildet.

Der Zugentlastungsabschnitt 36c weist einen Verbindungsabschnitt 74c zur Herstellung einer Verbindung zwischen einem Verbindungselement 32c und dem Dichtpanel 34c auf.

Der Zugentlastungsabschnitt 36c weist ein Zugentlastungselement 76c zu einer direkten Kontaktierung eines länglichen Objekts 12c auf. Das Zugentlastungselement 76c ist als spannzugförmiger Lamelleneinsatz 84c ausgebildet.

Der Zugentlastungsabschnitt 36c weist ein Druckbeaufschlagungselement 78c auf. Das Druckbeaufschlagungselement 78c ist als Hutmutter 80c ausgebildet. Das Zugentlastungselement 76c und das Druckbeaufschlagungselement 78c weisen jeweils einen Durchführbereich zur Durchführung des länglichen Objekts 12c auf. Das Zugentlastungselement 76c und das Druckbeaufschlagungselement 78c sind am länglichen Objekt 12c angeordnet.

Der Verbindungsabschnitt 74c ist mit dem Stabilisierungselement 26c einteilig verbunden. Der Verbindungsabschnitt 74c ist an dem Dichtpanel 34c an einer Außenseite eines Muffenbodens 40c angeordnet.

Der Verbindungsabschnitt 74c weist ein erstes und ein zweites Rastelement 56c auf. Die Rastelemente 56c sind zur Herstellung einer Rastverbindung zwischen dem Verbindungsabschnitt 74c und dem Dichtpanel 34c vorgesehen. Das Rastelement 56c weist eine Rastnase 58c auf. Das Rastelement 56c greift in dem montierten Zustand in eine dazu komplementäre Öffnung 70c am Dichtpanel 34c ein.

Der Verbindungsabschnitt 74c weist ein Außengewinde 88c auf. Das Druckbeaufschlagungselement 78c weist ein zum Außengewinde 88c des Verbindungsabschnitts 74c komplementäres Innengewinde 90c auf.

Das Zugentlastungselement 76c ist in einem montierten Zustand zwischen dem Verbindungsabschnitt 74c und dem Druckbeaufschlagungselement 78c angeordnet. In dem montierten Zustand ist das Druckbeaufschlagungselement 78c mit dem Verbindungsabschnitt 74c über eine kraftschlüssige Verbindung zwischen dem Außengewinde 88c und einem Innengewinde 90c verbunden. In dem montierten Zustand übt das Druckbeaufschlagungselement 78c Druck auf das Zugentlastungselement 76c aus. In dem montierten Zustand presst das Druckbeaufschlagungselement 78c das Zugentlastungselement 76c in und/oder gegen den Verbindungsabschnitt 74c und verkleinert dadurch den Durchführbereich des Zugentlastungselements 76c. In dem montierten Zustand überträgt sich der durch das Druckbeaufschlagungselement 78c aufgebrachte Druck auf das längliche Objekt 12c. In dem montierten Zustand entsteht zwischen dem Zugentlastungselement 76c und dem länglichen Objekt 12c in Umfangsrichtung eine Rutschhemmung. In dem montierten Zustand entsteht zwischen dem Zugentlastungselement 76c und dem länglichen Objekt 12c in Umfangsrichtung eine kraftschlüssige Verbindung.

In Fig. 10 ist eine perspektivische Explosionsdarstellung einer weiteren Dichtvorrichtung 10d gezeigt. Das Ausführungsbeispiel der Dichtvorrichtung 10d unterscheidet sich von dem Ausführungsbeispiel der Dichtvorrichtung 10c lediglich dadurch, dass die Dichtvorrichtung 10d zur Durchführung und Abdichtung eines länglichen Objekts 12d mit einem größeren Durchmesser im Vergleich zu einem Durchmesser des länglichen Objekts 12c vorgesehen ist. Bezüglich gleich bezeichneter Bauteile, insbesondere in Bezug auf Bauteile mit gleichen Bezugszeichen, kann grundsätzlich auch auf die Zeichnungen und/oder die Beschreibung der Ausführungsbeispiele der Figuren 1 bis 8 und der Figur 9 verwiesen werden.

Bei einem Verfahren zur Abdichtung des länglichen Objekts 12c, 12d gegenüber dem Dichtpanel 34c, 34d mit der Dichtvorrichtung 10c, 10d mit der Dichteinheit 14c, 14d werden der Einführschritt 64c, 64d und der Einrastschritt 68c, 68d ausgeführt (vgl. Fig. 5). Bei dem Verfahren entfällt der Zwischenschritt 66a.

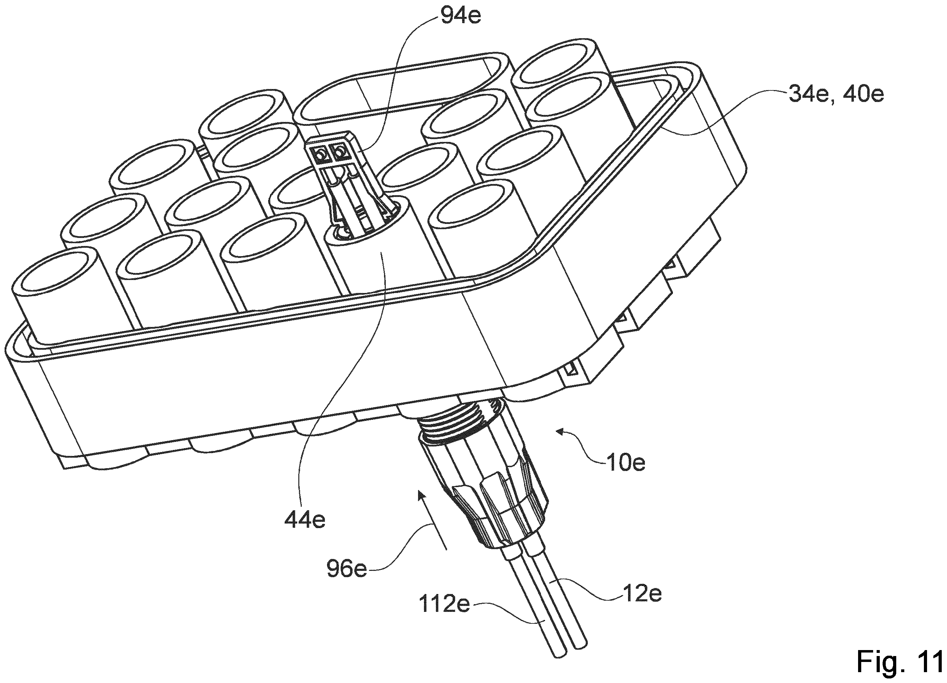

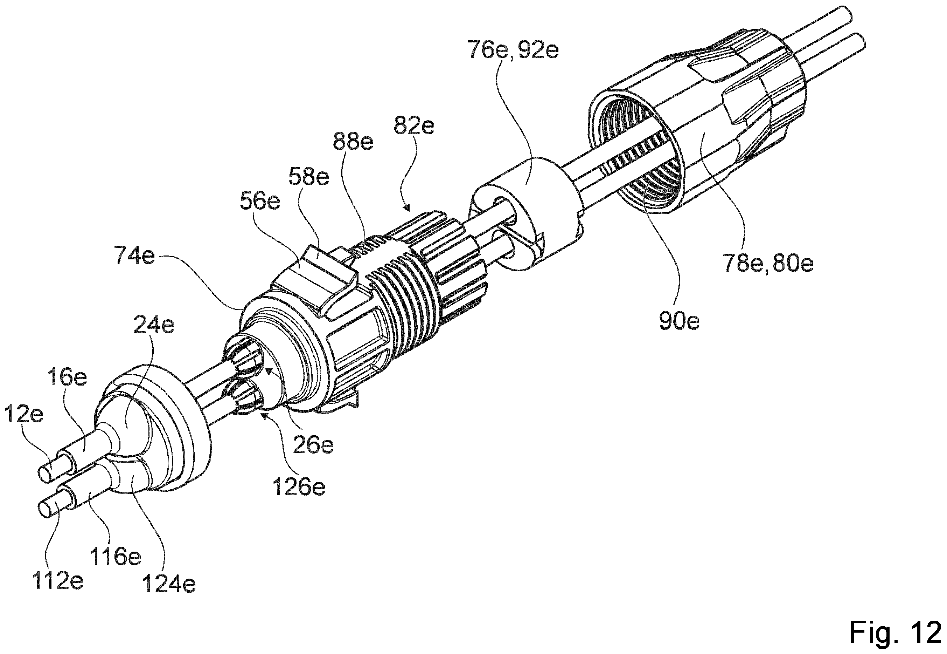

Fig. 11 zeigt ein weiteres alternatives Dichtsystem 38e mit einer weiteren alternativen Dichtvorrichtung 10e. Zur Vermeidung unnötiger Wiederholungen werden daher für gleiche Baugruppen gleiche Bezugszeichen verwendet und es wird auf die Ausführungen der Fig. 1 bis 8 sowie der Fig. 9 und 10 verwiesen. Nachfolgend wird nur auf die Details eingegangen, durch die sich die Ausführung der Fig. 1 bis 8 sowie der Fig. 9 und 10 von der Ausführung der Fig. 11 und Fig. 12 unterscheidet. Zur Unterscheidung der Ausführungsbeispiele sind die Buchstaben a-d in den Bezugszeichen der Ausführungsbeispiele in den Figuren 1 bis 10 durch den Buchstaben e in den Bezugszeichen des Ausführungsbeispiels der Figuren 11 und 12 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 10 verwiesen werden.

Die Dichtvorrichtung 10e ist in einer von Aufnahmen 44e eines Dichtpanels 34e angeordnet. Auf einer einer Montagerichtung 96e der Dichtvorrichtung 10e entgegengesetzten Seite des Dichtpanels 34e ist an der Aufnahme 44e eine Abfangungseinheit 94e eines Dichtsystems 38e angeordnet. Die Abfangungseinheit 94e ist zur Aufnahme und Befestigung zumindest eines Zentralelements eines länglichen Objekts 12e und/oder eines weiteren länglichen Objekts 112e vorgesehen.

Fig. 12 zeigt eine perspektivische Explosionsdarstellung der Dichtvorrichtung 10e. Eine Dichteinheit 14e weist einen Dichtabschnitt 16e auf. Die Dichteinheit 14e weist einen weiteren Dichtabschnitt 116e auf. Der weitere Dichtabschnitt 116e und der Dichtabschnitt 16e sind identisch ausgebildet.

Der weitere Dichtabschnitt 116e kontaktiert in dem montierten Zustand ein von dem länglichen Objekt 12e verschiedenes weiteres längliches Objekt 112e. Der weitere Dichtabschnitt 116e dichtet das weitere längliche Objekt 112e mittels einer intrinsischen Vorspannung ab. Das weitere längliche Objekt 112e und das längliche Objekt 12e sind identisch ausgebildet.

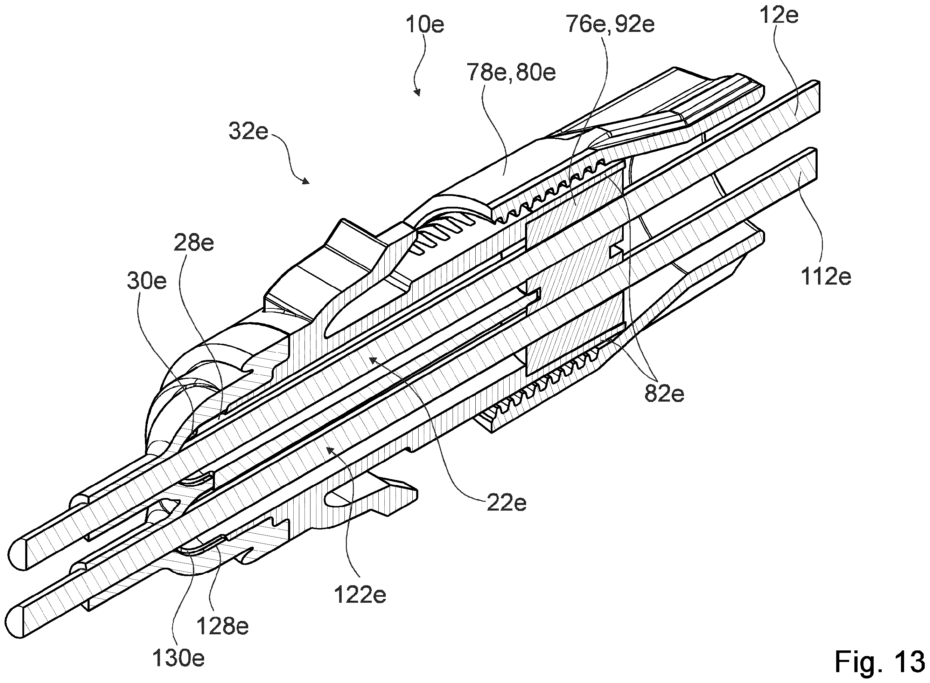

Die Dichteinheit 14e weist zwei Kabeleinführabschnitte 22e, 122e auf (vgl. Fig. 13). Die Kabeleinführabschnitte 22e, 122e weisen jeweils ein Stabilisierungselement 26e, 126e auf (vgl. Fig. 13). Der Kabeleinführabschnitt 22e ist zur Einführung des länglichen Objekts 12e vorgesehen. Der Kabeleinführabschnitt 122e ist zur Einführung des weiteren länglichen Objekts 112e vorgesehen.

Die Stabilisierungselemente 26e, 126e sind identisch ausgebildet. Die Stabilisierungselemente 26e, 126e weisen jeweils einen ersten Stabilisierungsabschnitt 28e, 128e und einen zweiten Stabilisierungsabschnitt 30e, 130e auf.

Ein Verbindungselement 32e ist mit den Stabilisierungselementen 26e, 126e einstückig verbunden. Weichelemente 24e, 124e der Stabilisierungselemente 26e, 126e sind einteilig ausgebildet. Die Weichelemente 24e, 124e und die Stabilisierungselemente 26e, 126e sind einstückig miteinander verbunden. Die Weichelemente 24e, 124e und die Stabilisierungselemente 26e, 126e sind untrennbar miteinander verbunden.

Ein Zugentlastungsabschnitt 36e ist mehrteilig ausgebildet. Der Zugentlastungsabschnitt 36e ist dreiteilig ausgebildet. Der Zugentlastungsabschnitt 36e weist einen Verbindungsabschnitt 74e zur Herstellung einer Verbindung zwischen dem Verbindungselement 32e und dem Dichtpanel 34e auf. Der Verbindungsabschnitt 74e weist an seinem Ende in Umfangsrichtung angeordnete Lamellen in Form eines Lamellenkäfigs 82e auf.

Der Zugentlastungsabschnitt 36e weist ein Zugentlastungselement 76e zu einer direkten Kontaktierung eines länglichen Objekts 12e auf. Das Zugentlastungselement 76e ist als flexibles Element 92 ausgebildet. Das flexible Element 92 kann aus Gummi, Neopren und/oder aus einem thermoplastischen Material ausgebildet sein. Das Zugentlastungselement 76e weist zwei Durchführbereiche zur Durchführung von dem länglichen Objekt 12e und dem weiteren länglichen Objekt 112e auf.

Der Zugentlastungsabschnitt 36e weist ein Druckbeaufschlagungselement 78e. Das Druckbeaufschlagungselement 78e ist als Hutmutter 80e ausgebildet. Das Zugentlastungselement 76e und das Druckbeaufschlagungselement 78e sind am länglichen Objekt 12e und am weiteren länglichen Objekt 112e angeordnet.

Der Verbindungsabschnitt 74e ist mit den Stabilisierungselementen 26e, 126e einteilig verbunden. Der Verbindungsabschnitt 74e ist an dem Dichtpanel 34e an einer Außenseite des Muffenbodens 40e angeordnet.

Der Verbindungsabschnitt 74e weist ein erstes und ein zweites Rastelement 56e auf. Die Rastelemente 56e sind zur Herstellung einer Rastverbindung zwischen dem Verbindungsabschnitt 74e und dem Dichtpanel 34e vorgesehen. Das Rastelement 56e weist eine Rastnase 58e auf. Das Rastelement 56e greift in dem montierten Zustand in eine dazu komplementäre Öffnung 70e am Dichtpanel 34e ein.

Der Verbindungsabschnitt 74e weist ein Außengewinde 88e auf. Das Druckbeaufschlagungselement 78e weist ein zum Außengewinde 88e des Verbindungsabschnitts 74e komplementäres Innengewinde 90e auf. Das Zugentlastungselement 76e ist in einem montierten Zustand zwischen dem Verbindungsabschnitt 74e und dem Druckbeaufschlagungselement 78e angeordnet. In dem montierten Zustand ist das Druckbeaufschlagungselement 78e mit dem Verbindungsabschnitt 74e über eine kraftschlüssige Verbindung zwischen dem Außengewinde 88e und dem Innengewinde 90e verbunden. In dem montierten Zustand ist das Zugentlastungselement 76e zumindest teilweise innerhalb des Lamellenkäfigs 82e angeordnet. In dem montierten Zustand übt das Druckbeaufschlagungselement 78e Druck auf die Lamellen des Lamellenkäfigs 82 aus. In dem montierten Zustand üben die Lamellen Druck auf das Zugentlastungselement 76e aus. Das Druckbeaufschlagungselement 78e presst das Zugentlastungselement 76e in den Verbindungsabschnitt 74e. In dem montierten Zustand verengt das Druckbeaufschlagungselement 78e die Durchführbereiche des Zugentlastungselements 76e.

In dem montierten Zustand überträgt sich der durch das Druckbeaufschlagungselement 78e auf den Lamellenkäfig 82e und damit auf das Zugentlastungselement 76e aufgebrachte Druck auf das längliche Objekt 12e und auf das weitere längliche Objekt 112e. In dem montierten Zustand entsteht zwischen dem Zugentlastungselement 76e und dem länglichen sowie dem weiteren länglichen Objekt 112e in Umfangsrichtung eine Rutschhemmung. In dem montierten Zustand entsteht zwischen dem Zugentlastungselement 76e und dem länglichen sowie dem weiteren länglichen Objekt 112e in Umfangsrichtung eine kraftschlüssige Verbindung.

Fig. 5 zeigt ein Ablaufdiagramm eines Verfahrens zur Abdichtung des Objekts 12a gegenüber dem Dichtpanel 34a mit der Dichtvorrichtung 10a mit der Dichteinheit 14a. In einem Einführschritt 64a wird die Dichteinheit 14a auf das Objekt 12a geschoben. Mittels eines Zwischenschritts 66a wird das Verbindungselement 32a auf die Dichteinheit 14a geschoben und mittels eines Kraftschlusses und/oder Formschlusses an der Dichteinheit 14a angeordnet. In einem Einrastschritt 68a wird die Dichteinheit 14a mittels des Verbindungselements 32a mit dem Dichtpanel 34a mittels einer Rastverbindung verbunden.

Bei einem Verfahren zur Abdichtung des länglichen Objekts 12e und des weiteren länglichen Objekts 112e gegenüber dem Dichtpanel 34e mit der Dichtvorrichtung 10e mit der Dichteinheit 14e werden der Einführschritt 64e und der Einrastschritt 68e ausgeführt (vgl. Fig. 5). Bei dem Verfahren entfällt ein Zwischenschritt 66a.

### Bezugszeichen

- 10: Dichtvorrichtung
- 12: längliches Objekt
- 14: Dichteinheit
- 16: Dichtabschnitt
- 18: Innendurchmesser
- 20: Außendurchmesser
- 22: Kabeleinführabschnitt
- 24: Weichelement
- 26: Stabilisierungselement
- 28: erster Stabilisierungsabschnitt
- 30: zweiter Stabilisierungsabschnitt
- 32: Verbindungselement
- 34: Dichtpanel
- 36: Zugentlastungsabschnitt
- 38: Dichtsystem
- 40: Muffenboden
- 44: Aufnahme
- 46: Kabel
- 48: Hohlraum
- 50: Rotationssymmetrieachse
- 52: erster Abschnitt
- 54: zweiter Abschnitt
- 56: Rastelement
- 58: Rastnase
- 60: Randelement
- 62: Klemmelement
- 64: Einführschritt
- 66: Zwischenschritt
- 68: Einrastschritt
- 70: Öffnung
- 72: Verschlusselement
- 74: Verbindungsabschnitt
- 76: Zugentlastungselement
- 78: Druckbeaufschlagungselement
- 80: Hutmutter
- 82: Lamellenkäfig
- 84: Lamelleneinsatz
- 88: Außengewinde
- 90: Innengewinde
- 92: flexibles Element
- 94: Abfangungseinheit
- 96: Montagerichtung
- 112: weiteres längliches Objekt
- 116: weiterer Dichtabschnitt
- 122: Kabeleinführabschnitt
- 124: Weichelement
- 126: Stabilisierungselement
- 128: erster Stabilisierungsabschnitt
- 130: zweiter Stabilisierungsabschnitt

## Patentansprüche

1. Dichtvorrichtung (10a, 10b, 10c, 10d, 10e) zur Durchführung und Abdichtung eines länglichen Objekts (12a, 12b, 12c, 12d, 12e), mit zumindest einer Dichteinheit (14a, 14b, 14c, 14d, 14e), welche dazu vorgesehen ist, das Objekt (12a, 12b, 12c, 12d, 12e) in einem montierten Zustand zumindest abschnittsweise vollständig in Umfangsrichtung zu umschließen, und welche zumindest einen Dichtabschnitt (16a, 16b, 16c, 16d, 16e) aufweist, welcher dazu vorgesehen ist, in dem montierten Zustand das Objekt (12a, 12b, 12c, 12d, 12e) zu kontaktieren und mittels einer intrinsischen Vorspannung abzudichten, **dadurch gekennzeichnet, dass** der Dichtabschnitt (16a, 16b, 16c, 16d, 16e) in zumindest einem demontierten Zustand über zumindest einen Großteil seiner Länge einen wenigstens im Wesentlichen konstanten Innendurchmesser (18a, 18b, 18c, 18d, 18e) aufweist.

2. Dichtvorrichtung (10e) nach Anspruch 1, **dadurch gekennzeichnet, dass** die Dichteinheit (14e) zumindest einen weiteren Dichtabschnitt (116e) aufweist, welcher dazu vorgesehen ist, in dem montierten Zustand ein von dem länglichen Objekt (12e) verschiedenes weiteres längliches Objekt (112e) zu kontaktieren und mittels einer intrinsischen Vorspannung abzudichten.

3. Dichtvorrichtung (10) nach Anspruch 1 oder 2, **dadurch gekennzeichnet, dass** der Dichtabschnitt (16a, 16b, 16c, 16d, 16e) und/oder der weitere Dichtabschnitt (116e) in zumindest einem demontierten Zustand über zumindest einen Großteil seiner Länge einen jeweiligen, wenigstens im Wesentlichen konstanten Außendurchmesser (20a, 20b, 20c, 20d, 20e) aufweist.

4. Dichtvorrichtung (10a, 10b, 10c, 10d, 10e) nach einem der vorhergehenden Ansprüche, **dadurch gekennzeichnet, dass** die Dichteinheit (14a, 14b, 14c, 14d, 14e) zumindest einen Kabeleinführabschnitt (22a, 22b, 22c, 22d, 22e, 122e) zur Einführung des Objekts (12a, 12b, 12c, 12d, 12e) und/oder des weiteren Objekts (112e) aufweist.

5. Dichtvorrichtung (10a, 10b, 10c, 10d, 10e) nach einem der vorhergehenden Ansprüche, **dadurch gekennzeichnet, dass** der Dichtabschnitt (16a, 16b, 16c, 16d, 16e) und/oder der weitere Dichtabschnitt (116e) und/oder der Kabeleinführabschnitt (22a, 22b, 22c, 22d, 22e, 122e) jeweils eine rotationssymmetrische Außen- und/oder Innenfläche aufweist.

6. Dichtvorrichtung (10a, 10b, 10c, 10d, 10e) nach Anspruch 4 oder 5, **dadurch gekennzeichnet, dass** der Kabeleinführabschnitt (22a, 22b, 22c, 22d, 22e, 122e) zumindest ein Weichelement (24a, 24b, 24c, 24d, 24e) und zumindest ein Stabilisierungselement (26a, 26b, 26c, 26d, 26e, 126e) mit einer höheren Festigkeit als das Weichelement (24a, 24b, 24c, 24d, 24e) aufweist.

7. Dichtvorrichtung (10a, 10b, 10c, 10d, 10e) nach Anspruch 6, **dadurch gekennzeichnet, dass** das Stabilisierungselement (26a, 26b, 26c, 26d, 26e, 126e) zumindest einen ersten Stabilisierungsabschnitt (28a, 28b, 28c, 28d, 28e, 128e) und zumindest einen kammartig ausgebildeten zweiten Stabilisierungsabschnitt (30a, 30b, 30c, 30d, 30e, 130e) aufweist.

8. Dichtvorrichtung (10a, 10b, 10c, 10d, 10e) nach einem der vorhergehenden Ansprüche, **dadurch gekennzeichnet, dass** die Dichteinheit (14a, 14b, 14c, 14d, 14e) einstückig ausgebildet ist.

9. Dichtvorrichtung (10a, 10b, 10c, 10d, 10e) nach Anspruch 8, **dadurch gekennzeichnet, dass** die Dichteinheit (14) mittels eines Mehrkomponentenspritzverfahrens hergestellt ist.

10. Dichtvorrichtung (10a, 10b, 10c, 10d, 10e) nach einem der vorhergehenden Ansprüche, **gekennzeichnet durch** ein Verbindungselement (32a, 32b, 32c, 32d, 32e) zur Herstellung einer Verbindung der Dichteinheit (14a, 14b, 14c, 14d, 14e) mit einem Dichtpanel (34a, 34b, 34c, 34d, 34e), wobei das Verbindungselement (32a, 32b, 32c, 32d, 32e) dazu vorgesehen ist, die Dichteinheit (14a, 14b, 14c, 14d, 14e) in einem verbundenen Zustand an das Dichtpanel (34a, 34b, 34c, 34d, 34e) zu pressen.

11. Dichtvorrichtung (10a, 10b, 10c, 10d, 10e) nach Anspruch 10, **dadurch gekennzeichnet, dass** das Verbindungselement (32) separat von der Dichteinheit (14) ausgebildet ist.

12. Dichtvorrichtung (10a, 10b, 10c, 10d, 10e) nach Anspruch 10 oder 11, **dadurch gekennzeichnet, dass** das Verbindungselement (32a, 32b, 32c, 32d, 32e) zumindest einen Zugentlastungsabschnitt (36a, 36b, 36c, 36d, 36e) zur Bereitstellung einer Zugentlastung des Objekts (12a, 12b, 12c, 12d, 12e) und/oder des weiteren Objekts (112e) aufweist.

13. Dichtvorrichtung (10b, 10c, 10d, 10e) zumindest nach den Ansprüchen 6 und 10, **dadurch gekennzeichnet, dass** das Verbindungselement (32b, 32c, 32d, 32e) mit dem Stabilisierungselement (26b, 26c, 26d, 26e, 126e) verbunden ist.

14. Dichtvorrichtung (10b, 10c, 10d, 10e) nach einem der vorhergehenden Ansprüche, **dadurch gekennzeichnet, dass** das der Dichtabschnitt (16a, 16b, 16c, 16d, 16e) zumindest teilweise aus einem kolloidartigen Material besteht.

15. Dichtsystem (38a, 38b, 38c, 38d, 38e) mit einer Dichtvorrichtung (10a, 10b, 10c, 10d, 10e) nach einem der vorhergehenden Ansprüche und mit zumindest einem Dichtpanel (34a, 34b, 34c, 34d, 34e), welches zumindest eine Aufnahme (44a, 44b, 44c, 44d, 44e) aufweist, in welcher die Dichteinheit (14a, 14b, 14c, 14d, 14e) zumindest teilweise anordenbar ist.

16. Verfahren zur Abdichtung zumindest eines länglichen Objekts (12a, 12b, 12c, 12d, 12e) gegenüber einem Dichtpanel (34a, 34b, 34c, 34d, 34e) mit einer Dichtvorrichtung (10a, 10b, 10c, 10d, 10e), insbesondere nach einem der Ansprüche 1 bis 14, mit zumindest einer Dichteinheit (14a, 14b, 14c, 14d, 14e), durch welche das Objekt (12a, 12b, 12c, 12d, 12e) in einem montierten Zustand zumindest abschnittsweise vollständig in Umfangsrichtung umschlossen wird und welche zumindest einen Dichtabschnitt (16a, 16b, 16c, 16d, 16e) aufweist, durch welchen das Objekt (12a, 12b, 12c, 12d, 12e) in dem montierten Zustand kontaktiert und mittels einer intrinsischen Vorspannung abgedichtet wird, **dadurch gekennzeichnet, dass** die Dichteinheit (14a, 14b, 14c, 14d, 14e) auf das Objekt (12a, 12b, 12c, 12d, 12e) geschoben und anschließend mit einem Dichtpanel (34a, 34b, 34c, 34d, 34e) verbunden wird.
